Europäisches Patentamt

European Patent Office

Office européen des brevets

(11) Publication number: **0 319 200**
**A1**

## (12) EUROPEAN PATENT APPLICATION

(21) Application number: **88311159.3**

(22) Date of filing: **25.11.88**

(51) Int. Cl.⁴: **G01M 3/16**

(30) Priority: **04.12.87 JP 307210/87**

(43) Date of publication of application:
**07.06.89 Bulletin 89/23**

(84) Designated Contracting States:
**AT BE CH DE ES FR GB GR IT LI LU NL SE**

(71) Applicant: **JUNKOSHA CO. LTD.**
**25-25, Miyasaka 2-chome**
**Setagaya-ku Tokyo 156(JP)**

(72) Inventor: **Imaizumi, Haruo**
**5-102, Nishi-Asuma-Danchi 1813-1**
**Nishi-Asuma**
**Ohmiya-shi Saitama(JP)**

(74) Representative: **Taylor, Derek George et al**
**Mathisen, Macara & Co. The Coach House**
**6-8 Swakeleys Road**
**Ickenham Uxbridge UB10 8BZ(GB)**

(54) **A leak detecting system.**

(57) A leak detecting system is provided comprising (a) a plurality of leak detectors (5), each of which has (i) a leak detecting sensor (6) which detects the leakage of a fluid by means of a change in resistance, and (ii) a resistance measuring component (7) which measures the quantitative change in the resistance of the leak detecting sensor, and (b) a processing device (i) which is connected to a display, and (ii) which processing device reads the outputs of the plurality of leak detectors and displays the location(s) of type(s) of leakage on the display. The processing device preferably is an electronic computer equipped with a memory.

_Fig.1._

# A LEAK DETECTING SYSTEM

The present invention relates to a leak detecting system which detects the leakage of a fluid, for example in a fluid processing plant, and alerts the appropriate supervisor in the event of a leak.

Conventional leak detecting systems generally consist of one or more leak detectors installed in places where leakage might occur, and an output device which alerts the appropriate supervisor of a leak by converting the signal generated when one of the leak detectors detects leakage at the place of installation into a means of transmitting information, such as sound or light signals. The output device of such a leak detecting system is usually installed in a panel, in a control room, thus making it possible to inform the supervisor of the location where leakage has occurred.

However, in conventional leak detecting systems of the type described above, the output signal of the output device merely informs the supervisor that the corresponding leak detector has detected leakage. Accordingly, time is required in order to ascertain which output device corresponds to which detector location. Furthermore, if all of the installation locations are displayed on the panel in which the output devices are installed, the overall size of the panel must be increased to accommodate this display.

In cases where, for example, a detector which has been installed for the purpose of detecting oil is replaced by a detector for the detection of some other substance, the constituent parts of the output device which receives the output of this detector must also be replaced. Accordingly, such leak detecting systems are uneconomical.

The present invention was designed in light of the abovementioned problems encountered in the prior art.

According to the present invention there is provided a leak detecting system comprising a plurality of leak detectors, each of which has a leak detecting sensor which detects the leakage of a fluid by means of a change in resistance, and a resistance measuring component which measures the quantitative change in the resistance of said leak detecting sensor, the plurality of leak detectors connected to a processing device which is connected to a display, and which processing device reads the outputs of said plurality of leak detectors and displays the location and type of the or each leakage on said display. The processing device preferably is an electronic computer equipped with a memory.

An embodiment of the invention will now be particularly described, by way of example, with reference to the accompanying drawings in which:-

Figure 1 is a block diagram illustrating the construction and configuration of one embodiment of the present invention;

Figures 2 and 3 are diagrams illustrating portions of the memory of the processing device of the invention;

Figure 4 is a circuit diagram of one of the leak detectors used in conjuction with the invention, and

Figure 5 is a flow diagram illustrating the processing sequence in accordance with the invention.

The leak detecting system of the present invention is equipped with a plurality of leak detectors, each of which has a leak detecting part which detects the leakage of a fluid by means of a charge in resistance, and a resistance measuring part which measures the change in the resistance of the leak detecting part. A processing device which is connected to a display, and which reads the outputs of the plurality of leak detectors, displays the position or positions of leakage on the display device.

In the abovementioned leak detector, the leak detecting part detects leakage as a resistance value, while the resistance measuring part measures the resistance value of the leak detecting part. The processing device reads the output of the leak detectors in order to ascertain whether any of the leak detectors has detected leakage. In cases where leakage has been detected, the processing device displays the location(s) by means of an image on the aforementioned display, thus providing this information to the supervisor.

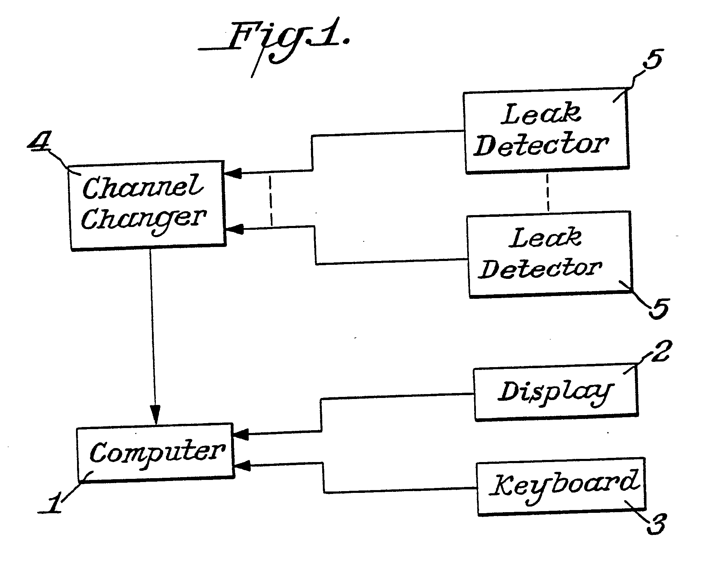

Figure 1 is a block diagram which shows the system as having a processing device 1 to which a display 2 and keyboard 3 are connected. This processing device includes an electronic computer which is equipped with an internal memory. A plurality of leak detectors 5 are connected to this processing device 1 via communications circuits, e.g. RS232C, and a channel changer 4. In this example of application, the channel changer has 16 channels, with a separate leak detector 5 corresponding to each channel, 1 through 16. However, the number of channels may be increased by using an expanded unit.

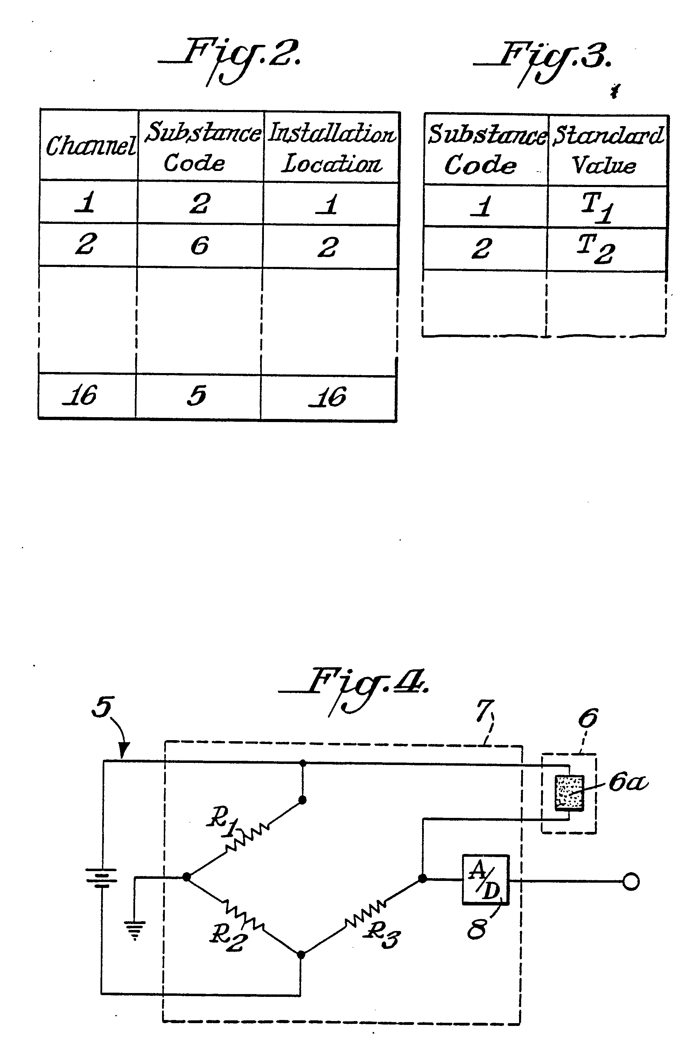

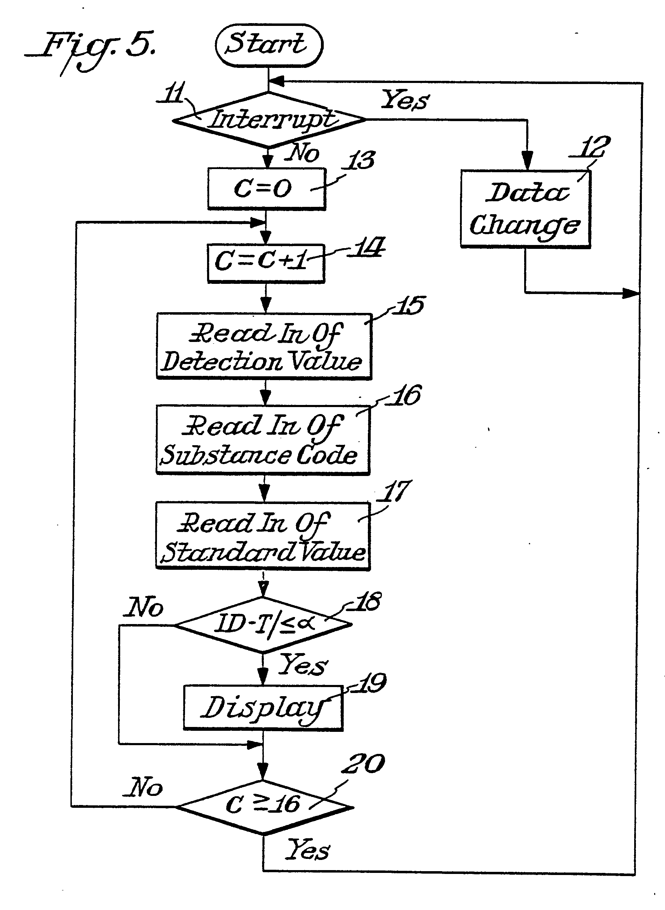

Figures 2 and 3 illustrate portions of the internal structure of the memory with which the processing device 1 is equipped. Figure 2 illustrates the correspondence of the individual channels of the channel charger 4 to the substance codes which indicate the type of fluid detector, and the detector location codes, described below.

Figure 3 illustrates the correspondence between the substance codes shown in Figure 2 and the standard values for the substances indicated by these codes. The aforementioned standard values are standard data which are used to ascertain whether or not a given leak detector 5 has detected a substance which corresponds to the substance code. These values are determined on the basis of the substance to be detected and elements which make up the leak detecting part, also described below. For example, in cases where oil leakage is detected, a somewhat high resistance value is detected, though this may depend on the type of oil involved, while in cases where water leakage is detected, a lower resistance value is detected. Accordingly, the standard values are set on the basis of these respective characteristics.

Furthermore, the memory contents shown in Figures 2 and 3 are ordinarily stored in a RAM (random-access memory), so that data can easily be changed, added or deleted. When the power supply of the processing device 1 is off, the data is stored in an external memory such as a hard disk.

Figure 4 illustrates the structure of one of the leak detectors 5. This leak detector 5 has a leak detecting part 6 and a resistance measuring part 7. The leak detecting part 6 is formed by connecting lead wires to both ends of a detecting element 6a which, when invaded by a specified substance (fluid), shows a resistance value corresponding to said substance. A material formed by dispersing carbon particles inside a porous, expanded polytetrafluoroethylene material can be used for this detecting element.

In the resistance measuring part 7, a Wheatstone bridge is formed by resistors R1, R1 and R3 and the leak detecting part 6, and this measure the resistance value of the leak detecting part 6. The measurement result is output via an A/D converter 8.

Sixteen such leak detectors 5 are provided, and each of these leak detectors can output its detection results to the processing device 1 via the channel changer 4. Furthermore, the channel of the channel changer 4 is software-controlled by the processing device 1, and can be changed by operation of the keyboard 3 or by a programme in execution.

Furthermore, data which allows the drawing of a map of the processing plant including oil lines and fuel tanks, in which the leak detecting parts 6 are installed is stored in the memory of the processing device 1. On the basis of this data, a line drawing map of the plant (not shown in the figures) can be drawn on the display 2. Furthermore, the data of this map can be stored in the computer as the vertex coordinated of the line drawings or the overall screen may be stored as graphic data. The amount of data required is smaller in the former case, considering the drawing time required. However, it would appear that the latter storgage method is more desirable.

Furthermore, information indicating the plant locations to which the installation location codes correspond is also stored in the memory, and the positions of the locations in the screen drawn on the display are also similarly stored.

Next, the operation of this example of application will be described with reference to Figure 5, which indicates the processing procedure inside the electronic computer which constitutes the processing device 1.

First, in step 11, it is ascertained whether or not the interrupt key is being pressed. If the interrupt key is being pressed, the processing device proceeds to step 12. Data such as substance codes and installation location codes, stored in the memory is changed, added or deleted, and the processing device then returns to step 11.

If it is ascertained that the interrupt key is not being pressed in step 11, then the processing device proceeds to step 13, and the variable C which indicates the current channel is zero-cleared.

Next, the processing device proceeds to step 14, the variable C is counted up one, and the processing device proceeds to step 15.

In step 15, the detection value of the channel corresponding to the current variable C is read in, and substituted for a data variable D.

Next, the processing device proceeds to step 16, and the substance code corresponding to the variable C is read in from the memory.

Next, the processing device proceeds to step 17, and the standard value T corresponding to the abovementioned substance code is read in from the memory. The processing device then proceeds to step 18, and it is ascertained whether or not the difference between the data variable D, which has been replaced by the current detection value, and the standard value T is less then a certain constant X. X is a sufficiently small positive number. Specifically, it is ascertained whether or not the detection result of the leak detector 15 is substantially the same as the standard value, i.e., whether or not leakage has occurred in the location where the leak detecting part 16 corresponding to channel C is installed.

If it is ascertained that leakage has occurred, the processing device proceeds to step 19, and the location of the leakage is output as an image on the display, e.g., the colour of the location where leakage has occurred is changed, so that the supervisor is alerted to the leakage.

As a result of this image data, the supervisor is quickly able to gain accurate information concerning this leakage and the location where it has occurred. The supervisor can therefore take prompt action to minimize any damage that might be caused by the leakage.

When the processing of step 19 is completed, or when a response of "NO" is obtained in step 18, the processing device proceeds to step 20, and it is ascertained whether or not the variable C is equal to or greater than 16. Since 16 is the number of channels, it is a value that will be changed if the number of channels is different.

If a response of "YES" is obtained in step 20, the processing device returns to step 11. If a response of "NO" is obtained, then the processing device returns to step 14, and the abovementioned process is repeated.

In this example of application, even if the leak detecting part 16 is to be changed from a part used to detect oil to a part used to detect water, this can be handled merely by changing the data stored in the memory. Accordingly, there is no need to change the device itself, and an economical leak detecting system can thus be obtained.

Furthermore, since the quantity of data such as substance codes, installation location codes and standard values can be increased in accordance with the storage capacity of the memory, this system can easily be used in various types and sizes of plants.

Moreover, in the above example, the leak detecting system is operated by a programme sequence control. However, the present invention is not limited to such a configuration. For example, leakage status at desired locations can be ascertained by operating the keyboard 3 connected to the processing device 1.

In the above example, the occurrence of leakage was ascertained from the difference between a measured value and a pre-stored standard value. However, as long as the occurrence of leakage can be ascertained, any desired method may be used for this detection. For example, the occurence of leakage might be ascertained from the difference between a calculated running mean of the measurement values and the current measurement value.

As described above, the leak detecting system of the present invention outputs locations of leakage in image forms. Accordingly, locations where leakage has occurred can be quickly and accurately ascertained using the system of the present invention. As a result, prompt action can be taken so that any damage resulting from leakage is minimized. Furthermore, even if it should become necessary to change leak detecting parts, this can be handled merely by changing the data stored in the processing device. Thus, the present invention has the merits of being economical and easily applicable to various types of plants.

## Claims

1. A leak detecting system comprising a plurality of leak detectors, each of which has a leak detecting sensor which detects the leakage of a fluid by means of a change in resistance, and a resistance measuring component which measures the quantitative change in the resistance of said leak detecting sensor, the plurality of leak detector connected to a processing device which is connected to a display, and which processing device reads the outputs of said plurality of leak detectors and displays the location and type of the or each leakage on said display.

2. A leak detecting system according to claim 1 wherein said processing device is an electronic computer equipped with a memory.

_Fig.1._

_Fig.2._

| Channel | Substance Code | Installation Location |
|---------|---------------|----------------------|
| 1 | 2 | 1 |
| 2 | 6 | 2 |
| | | |
| | | |
| 16 | 5 | 16 |

_Fig.3._

| Substance Code | Standard Value |
|---------------|---------------|
| 1 | $T_1$ |
| 2 | $T_2$ |
| | |

_Fig.4._

# Fig. 5.

```
                    ( Start )
                        │
                        ▼
        11 ──┐     ◇─────────◇        Yes
             └── Interrupt ────────────┐
                ◇─────────◇            │
                    │ No               │
                    ▼            12 ──┐│
              ┌──────────┐ 13         ▼│
              │   C=0    │──┘    ┌──────────┐
              └──────────┘       │  Data    │
                    │            │  Change  │
       ┌────────────┤            └──────────┘
       │            ▼                  │
       │      ┌──────────┐ 14          │
       │      │  C=C+1   │──┘          │
       │      └──────────┘             │
       │            │                  │
       │            ▼                  ├──────────►
       │   ┌──────────────────┐ 15
       │   │    Read In Of    │─┘
       │   │ Detection Value  │
       │   └──────────────────┘
       │            │
       │            ▼
       │   ┌──────────────────┐ 16
       │   │    Read In Of    │─┘
       │   │  Substance Code  │
       │   └──────────────────┘
       │            │
       │            ▼
       │   ┌──────────────────┐ 17
       │   │    Read In Of    │─┘
       │   │  Standard Value  │
       │   └──────────────────┘
       │            │
       │  No        ▼         18
       │ ◄──── ◇──────────◇ ─┘
       │       ◇ |D·T|≤α  ◇
       │       ◇──────────◇
       │            │ Yes
       │            ▼      19
       │      ┌──────────┐─┘
       │      │ Display  │
       │      └──────────┘
       │            │
       │            ▼         20
       │  No   ◇──────────◇ ─┘
       └────── ◇  C ≥ 16  ◇
               ◇──────────◇
                    │ Yes
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN vol. 5, no. 126 (P-75)(798), 14th August 1981; & JP - A - 56 64 633 (HITACHI SEISAKUSHO K.K.) 01-06-1981 | 1 | G 01 M 3/16 |
| X | PATENT ABSTRACT OF JAPAN * vol. 3, no. 106, 157 (E-135), 7th September 1979; & JP - A - 54 83886 (HITACHI SEISAKUSHO K.K.) 07-04-1979 | 1 | |
| Y | idem | 2 | |
| A | PATENT ABSTRACTS OF JAPAN vol. 4, no. 142 (P-30)(624), 7th October 1980; & JP - A - 55 93037 (MITSUBISHI DENKI K.K.) 15-07-1980 | 1 | |
| A | PATENT ABSTRACTS OF JAPAN vol. 5, no. 77 (P-62)(749), 21th May 1981; & JP - A - 56 24542 (TATEISHI DENKI K.K.) 09-03-1981 | 1 | |
| Y | EP-A-0 073 322 (R. BARLIAN) * pages 29-31 * | 2 | TECHNICAL FIELDS SEARCHED (Int. Cl.4)  G 01 M |
| A | DE-A-3 600 374 (G. NEUMANN) * columns 7-8 * | 1,2 | |
| A | GB-A-2 023 896 (I.C. MOLLER A/S) * page 2 * | 1 | |

The present search report has been drawn up for all claims

| Place of search | Date of completion of the search | Examiner |
|---|---|---|
| BERLIN | 30-01-1989 | DIETRICH A. |